Europäisches Patentamt

European Patent Office

Office européen des brevets

(19)

(11) Numéro de publication : **0 480 805 A1**

# (12) DEMANDE DE BREVET EUROPEEN

(21) Numéro de dépôt : **91402653.9**

(22) Date de dépôt : **04.10.91**

(51) Int. Cl.⁵ : **G02B 13/14**

(30) Priorité : **09.10.90 FR 9012444**

(43) Date de publication de la demande :
**15.04.92 Bulletin 92/16**

(84) Etats contractants désignés :
**DE FR GB IT**

(71) Demandeur : **THOMSON-TRT DEFENSE**
**Rue Guynemer**
**F-78280 Guyancourt (FR)**

(72) Inventeur : **Rollin, Joel**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Systèmes d'objectifs à athermalisation optique.**

(57)    L'invention concerne un dispositif d'objectif infrarouge à athermalisation et achromatisation optiques.

Ce dispositif comprend un ensemble convergent avant comportant au moins une lentille divergente faisant office de hublot et une lentille convergente et un ensemble divergent arrière comportant au moins une lentille divergente. Ces trois lentilles sont choisies en trois matériaux différents du type utilisables dans la bande spectrale de 8 à 12$\mu$m. Elles peuvent notamment être respectivement en germanium, chalcogénure et sulfure de zinc.

FIG. 2

EP 0 480 805 A1

La présente invention se rapporte à des systèmes d'objectifs infrarouges à athermalisation et achromatisation optiques.

Le principe de l'athermalisation passive a déjà fait l'objet de nombreuses publications et de brevets.

Ainsi, une combinaison optique du type dyalite à deux groupes convergents de façon à réaliser un système achromatique a été décrite dans la demande de brevet GB-A- 2 121 211, la combinaison optique compensant les variations de tirage optique induites par la dilatation du support et les changements des indices des verres avec la température. Elle comporte un ensemble de deux lentilles, approximativement achromatique et un ensemble arrière, constitué d'un doublet, une lentille convergente en $AS_2Se_3$ et une lentille divergente en germanium, qui subit de fortes variations de focale en température.

Par ailleurs, on connaît également des systèmes présentant des architectures différentes, comme décrit par exemple dans la demande de brevet GB 2 161 616 dont l'élément de base est constitué d'un triplet collé dont les deux premières lentilles, une lentille frontale de puissance positive en séléniure de zinc ou en chalcogénure et une lentille divergente en sulfure de zinc, assurent l'achromatisation, tandis que la lentille arrière divergente en germanium permet de réaliser une athermalisation. Toutefois, dans tous les systèmes d'objectifs de l'art antérieur, les variations des focales, les sensibilités aux gradients thermiques ne sont pas corrigées d'une manière suffisante.

On a aussi proposé des systèmes d'objectifs à miroirs, qui en général sont moins sensibles aux fluctuations thermiques. Toutefois de tels systèmes sont rarement utilisés car, d'une part, ils ne permettent pas un champ suffisant, et, d'autre part, ils apportent souvent une occultation centrale et entraînent alors des dimensions de miroirs incompatibles avec les contraintes d'encombrement.

De ce qui précède, il est clair que les combinaisons dioptriques seront donc préférées. Toutefois, la plupart des architectures proposées s'avèrent très sensibles aux dérives thermiques, dès lors que l'on utilise le germanium pour la fabrication des lentilles et que l'on désire réaliser des focales d'objectifs relativement longues.

Un objet de la présente invention est de réaliser un système d'objectif infrarouge dont la lentille frontale peut faire office de hublot avant.

Un autre objet de l'invention est de réaliser un dispositif d'objectif infrarouge dont les différents éléments lenticulaires seront fabriqués à partir de matériaux dans la bande spectrale de 8 à 12µm.

Encore un autre objet de l'invention est de réaliser un dispositif d'objectif infrarouge présentant une insensibilité relative aux gradients thermiques.

Encore un autre objet de la présente invention est de réaliser un dispositif d'objectif infrarouge dont les variations de focales en températures sont minimisées, de sorte que le champ de ce système d'objectif n'évolue pas en température.

La présente invention a donc pour objet un dispositif d'objectif infrarouge à athermalisation et achromatisation optiques passives résultant de la structure du dispositif, ce dispositif comportant au moins un ensemble convergent coopérant avec au moins un ensemble divergent, ces ensembles étant alignés sur le même axe optique, caractérisé en ce que l'ensemble convergent est constitué par au moins une lentille convergente associée à au moins une lentille divergente et en ce que l'ensemble divergent est constitué d'au moins une lentille divergente, tous les matériaux constitutifs de ces lentilles étant choisis parmi ceux utilisables dans la bande spectrale de 8 à 12µm. Selon une caractéristique essentielle de l'invention, chaque lentille du dispositif infrarouge est réalisée en un matériau différent de celui constituant chaque lentille adjacente.

Dans le dispositif de l'invention, la lentille frontale est destinée à remplacer le hublot de sortie classique du système infrarouge et est constituée en un matériau présentant les caractéristiques physiques et de résistance aux agents chimiques et aux intempéries, appropriées, par exemple du germanium.

Selon une première forme de réalisation de dispositif d'objectif infrarouge selon l'invention, le premier ensemble convergent est constitué d'une lentille divergente en un matériau choisi, en germanium ou en sulfure de zinc, et d'une lentille convergente en chalcogénure (Amtir).

Selon une variante de réalisation, on associe un groupe arrière divergent en sulfure de zinc, à une lentille avant convergente en germanium.

Le groupe arrière comporte donc au moins une lentille en sulfure de zinc si le germanium est utilisé dans le groupe avant.

D'autres avantages et caractéristiques de l'invention apparaîtront à la lecture de la description suivante, faite en référence aux dessins annexés dans lesquels :

– Les figures 1 et 2 illustrent des agencements de lentilles selon la présente invention ;

– La figure 3 illustre différentes courbes représentant les variations thermiques de focales pour différents agencements de lentilles ;

– Les figures 4A, 4B et 4C illustrent respectivement les valeurs de la fonction de transfert de modulation à la demi-fréquence de coupure du détecteur, pour différents agencements d'objectifs selon la présente invention ;

– La figure 5 illustre une autre forme de réalisation d'objectifs athermalisés selon la présente invention ;

– Les figures 6A, 6B et 6C illustrent la chute de fonction de transfert de modulation pour différents agencements d'objectifs.

Avant de décrire plus en détail les différentes formes et modes de réalisation selon la présente invention, il convient tout d'abord de répertorier les principales causes des modifications thermiques d'une combinaison optique, à savoir :

– les variations des indices des matériaux avec la température, d'un ordre de grandeur supérieur aux verres utilisés pour les longueurs d'ondes visibles ;

– les dilatations mécaniques des supports ou des optiques ;

– les phénomènes de contraintes des lentilles en température ; ce dernier effet pourrait toutefois être éliminé par un montage mécanique approprié.

Le tableau 1 ci-après détaille les caractéristiques thermiques et spectrales des quatre matériaux infrarouges, couramment utilisés dans la bande spectrale (8 -12μm) : on voit que l'indice du germanium, verre le plus utilisé à cause de sa faible dispersion chromatique et de son indice de réfraction élevé, subit de très fortes variations en température. Ce tableau spécifie les caractéristiques spectrales de ces verres, dont la connaissance conditionne la mise en place d'une combinaison optique de caractéristiques requises.

## Tableau 1 - Caractéristiques thermiques et spectrales

| Matériau | Zn S | Zn Sr | Ge | Amtir |
|---|---|---|---|---|
| Variation d'indice dn/dt | $4,33.10^{-5}$ | $6,00.10^{-6}$ | $3,96.10^{-4}$ | $8,50.10^{-5}$ |
| Coefficient de dilatation $\alpha$ | $7,85.10^{-6}$ | $7,57.10^{-6}$ | $6,10.10^{-6}$ | $12,8.10^{-6}$ |
| Indice n | 2,20 | 2,40 | 4,00 | 2,49 |
| Nombre d'Abbe (8-12$\mu$m) | 22,8 | 58,1 | 1112,29 | 112,98 |

Par ailleurs, en ce qui concerne les défocalisations thermiques, il convient de préciser que, pour un objectif non-athermalisé, le plan de focalisation varie avec la température. La chute de qualité est perceptible dès que la défocalisation dépasse la profondeur de champ de la caméra, cette profondeur de champ étant définie par l'ouverture du système et la taille du détecteur ou de son image dans le plan focal de l'objectif si un module de balayage accompagne le dispositif. Dans les cas des objectifs à système de balayage modulaire thermique (SMT), ouverts à F/4.1, l'image du détecteur dans ce plan focal a par exemple pour dimensions 90μm. On peut alors démontrer qu'une défocalisation de l'ordre de 280μm produit une chute de la fonction de transfert de modulation, qui est une fonction de qualité, de 10%, ce qui affecte peu la qualité de l'image. On peut alors considérer que l'objectif est athermalisé en tirage dès lors que la défocalisation aux températures extrêmes de fonctionnement ne dépasse pas cette valeur.

En ce qui concerne les variations de focale en température, il y a lieu de noter qu'un objectif peut très bien être athermalisé en tirage sans que sa focale reste constante en température. Supposons, dans un exemple plus spécialement dirigé sur les applications militaires, qu'une conduite de tir soit associée à la caméra. L'observateur déplace un réticule sur la cible repérée et, en réponse, le traitement électronique envoie ensuite cette consigne de décalage au système de tir qui gère, par exemple, les valeurs de hausse du canon. Si l'objectif n'est pas athermalisé en focale, le champ apparent pointé par le réticule dérive en température de sorte que, si le traitement ne tient pas compte de cette erreur, la précision de tir diminue quand on s'écarte de la température nominale. En l'absence de distorsion, un déplacement du réticule pour rallier une direction de visée θ sera donné par la relation :

$$yo = fo * \tan\theta$$

Si la focale fo change avec la température, pour un décalage yo du réticule, on commet une erreur δθ d'appréciation de la direction de visée θo :

$$\delta\theta = -\frac{\Delta f}{fo} \sin\theta o \cos\theta o$$

Par exemple, une variation de focale relative de 2% pour un objectif de 5° de champ entraîne une erreur de pointé de l'ordre d'un mètre à un kilomètre en bord de champ diagonal : cette erreur se rajoute bien sûr aux incertitudes mécaniques.

Classiquement, pour une lentille mince, d'indice de réfraction n, la distance focale f s'exprime en fonction des rayons R1 et R2 des dioptres qui la limitent par la relation :

$$\frac{1}{f} = (n - 1)\left(\frac{1}{R_1} - \frac{1}{R_2}\right)$$

En présence d'une variation de température $\Delta T$ : l'indice n et les rayons $R_1$ et $R_2$ deviennent n', $R'_1$ et $R'_2$ tels que:

$$n' = n + \frac{dn}{dt}\Delta T$$

$R'_1 = R_1 (1 + \alpha\Delta T)$
$R'_2 = R_2 (1 + \alpha\Delta T)$

Soit une variation relative de focale :

$$-\frac{\Delta f}{f} = \frac{\Delta T}{\eta} \quad \text{avec} \quad \eta = \frac{1}{\left[\frac{\delta n / \delta T}{(n - 1)} - \alpha\right]}$$

On peut donc définir un pseudo-nombre d'Abbe $\eta$, caractérisant les dérives thermiques d'une lentille mince.

Ainsi, pour les quatre matériaux évoqués précédemment :

| Matériau | Zn S | Zn Se | Ge | Amtir |
|---|---|---|---|---|
| $\eta$ | 35 419 | 28 339 | 7 943 | 22 600 |

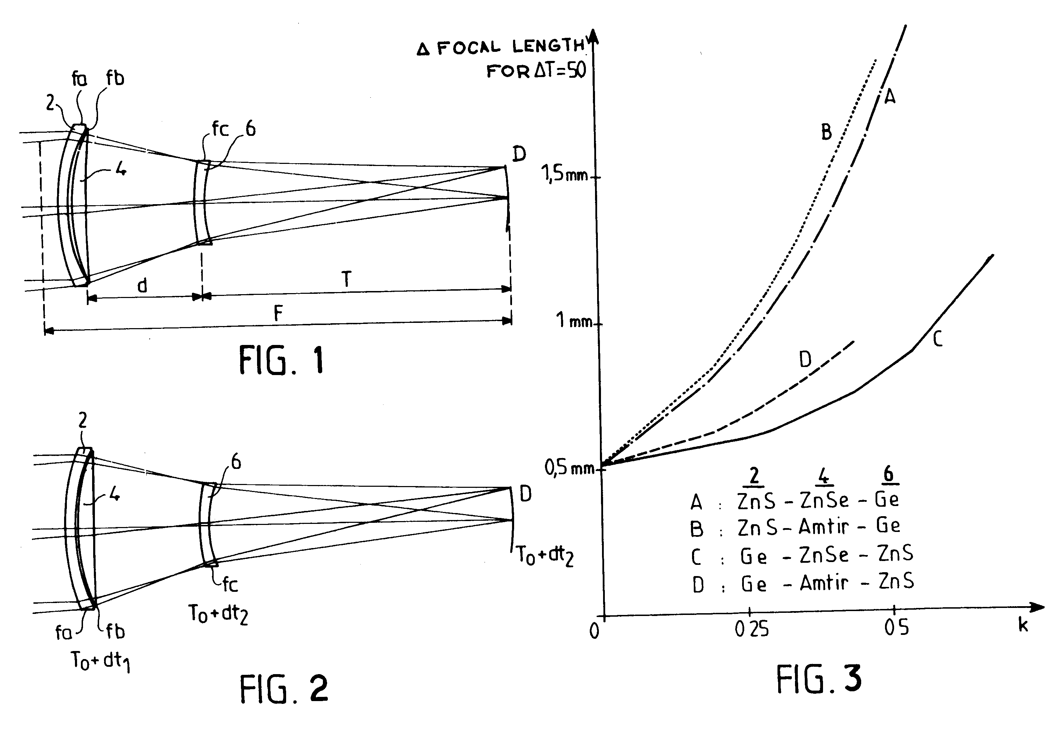

Des objectifs à trois lentilles ont été représentés sur les figures 1 et 2 annexées. Ils comportent un doublet convergent à l'avant constitué de deux lentilles 2 et 4 respectivement divergente et convergente et une lentille divergente 6 à l'arrière. Il s'agit là d'une combinaison du type téléobjectif, présentant une distance d entre les ensembles de lentilles avant et arrière, une distance T (tirage) entre la lentille arrière et le plan focal où est placé un détecteur IR, D, une focale F pour l'objectif, des focales fa et fb respectivement pour les lentilles 2 et 4 constitutives du doublet donnant naissance à une focale avant f1 convergente, et une focale fc pour la lentille divergente arrière 6. Soient k = d/f$_1$ et de façon évidente $k = 1 - \frac{T}{F}$ (T tirage). T et F sont des données fixées par les contraintes d'encombrement.

On peut alors, k étant donc donné, calculer les focales respectives des lentilles 2, 4 et 6, fa, fb, fc pour réaliser les conditions requises, à savoir l'achromatisation sur l'axe, l'obtention de la focale et l'athermalisation de l'objectif.

En ce qui concerne les conditions d'achromatisation, il convient de donner les précisions suivantes :

Si $\delta a$, $\delta b$ et $\delta c$ désignent respectivement les nombres d'Abbe des lentilles 2, 4 et 6, la condition d'achromatisation devient :

$$\frac{1}{fa\,\delta a} + \frac{1}{fb\,\delta b} + \frac{(1 - k)^2}{fc\,\delta c} = 0 \qquad [P_1]$$

Valeur de la focale

$$\text{Formule de Gullstrand :} \frac{1}{fa} + \frac{1}{fb} + \frac{(1 - k)}{fc} = \frac{1}{F} \qquad [P_2]$$

En ce qui concerne la condition d'athermalisation, on notera que :

$\eta a$, $\eta b$, $\eta c$ correspondent aux pseudo-nombres d'Abbe thermiques définis ci-dessus pour les 3 lentilles 2, 4, 6:

$\alpha$ est le coefficient de dilatation du support, aluminium ($0,24.10^{-4}$) ou inox ($0, 125. 10^{-4}$).

Le calcul montre que, pour compenser les dilatations des entretoises du support, les focales fa, fb, fc doivent obéir à la relation :

$$\frac{1}{fa}\left(\frac{1}{\eta a} + k\alpha\right) + \frac{1}{fb}\left(\frac{1}{\eta b} + k\alpha\right) + \frac{(1-k)^2}{fc\ \eta c} = -\ \alpha\ \frac{(1-k)^2}{T} \qquad [P_3]$$

Quand les termes correctifs associés aux dilatations des supports mécaniques deviennent négligeables, cette relation $P_3$ devient tout-à-fait identique à la condition d'achromatisation $P_1$.

Les focales fa, fb et fc sont donc entièrement déterminées par ce système de trois équations à trois inconnues.

En ce qui concerne la minimisation des variations de focale, le calcul montre que la focale F n'évolue pas en température si fa, fb et fc vérifient l'égalité $P_4$ :

$$\frac{1}{fa.\eta a}\ \frac{1}{fb.\eta b} + \frac{(1-k)}{fc}\left(\frac{1}{\eta c} + \alpha\right) = 0 \quad [P_4]$$

Une telle condition est, en général, incompatible des précédentes, et un problème est de choisir la séquence des verres constituant les lentilles 2, 4, 6 de façon à minimiser $P_4$.

Ainsi, la figure 1 fournit la combinaison optimale, de ce point de vue, en fonction du paramètre k.

Selon l'invention le hublot frontal d'un dispositif classique de téléobjectif est donc remplacé par un ensemble convergent présentant une lentille frontale en germanium ; cela se traduit par un gain de transmission, mais il convient de résoudre le problème de gradient thermique qui se pose inévitablement, étant donné que le groupe de lentilles avant est normalement à une température légèrement différente de la lentille divergente arrière si bien, que le système n'est pas tout à fait athermalisé.

Supposons, comme représenté sur la figure 2, que l'ensemble avant, 2, 3, subisse une variation de température $dt_1$, tandis que la lentille arrière 6 et l'interface avec le détecteur D placé dans le plan focal s'écartent de la température-référence de $dt_2$, le calcul montre que, si le gradient de température reste linéaire entre le groupe avant et la lentille arrière une cale intermédiaire se dilate d'une valeur

$$d\alpha\ \frac{[dt_1 + dt_2]}{2}$$

L'expression ($P_5$) qui suit exprime alors la défocalisation $\varepsilon$, au premier ordre, pour un objectif auto-athermalisé, subissant un gradient de température :

$$\varepsilon = \frac{T^2}{(1-k)^2}\ (dt_2 - dt_1)\left[\frac{1}{fa.\eta a} + \frac{1}{fb.\eta b} + \frac{k\alpha}{2}\left(\frac{1}{fa} + \frac{1}{fb}\right)\right] \qquad [P_5]$$

La combinaison optique sera donc d'autant moins sensible aux gradients que la quantité P5 aura été minimisée.

Si l'on se réfère maintenant au dessin annexé, on voit sur la figure 3 quatre courbes A, B, C, D correspondant aux variations de focale pour une variation de température $\Delta T = 50°C$, pour quatre combinaisons optiques différentes, ces variations de focale étant portées en ordonnée tandis qu'en abscisse est porté le coefficient k = 1 -T/F correspondant, pour chaque système d'objectif selon l'invention.

La courbe A correspond à un système d'objectif selon l'invention dont l'ensemble convergent est constitué d'une lentille divergente 2 en ZnS coopérant avec une lentille convergente 4 en ZnSe, associé à un ensemble divergent constitué d'une lentille 6 en germanium ; la courbe B correspond à un ensemble convergent constitué d'une lentille divergente 2 en ZnS coopérant avec une lentille convergente 4 en chalcogénure (Amtir), et associé à une lentille divergente 6 en germanium ; la courbe C correspondant à un système d'objectif constitué d'un ensemble convergent comportant une lentille divergente 2 en germanium coopérant avec une lentille convergente 4 en ZnSe, cet ensemble étant associé à une lentille divergente 6 en ZnS, et la courbe D correspond à un système d'objectif constitué d'un ensemble convergent comportant une lentille divergente 2 en germanium coopérant avec une lentille convergente 4 en chalcogénure, cet ensemble étant associé à une lentille divergente 6 en ZnS.

Les caractéristiques spécifiées dans le tableau A suivant sont les rayons des dioptres d'entrée E et de sortie S des lentilles 2, 4 et 6 et les épaisseurs de matériaux se succédant sur l'axe optique pour un premier mode de réalisation du système d'objectif tel que représenté sur la figure 1, avec la combinaison de matériaux correspondant à la courbe D de la figure 3.

## TABLEAU A

| Dioptre | Rayon (mm) | Matériau suivant | Epaisseur suivante (mm) |
|---------|-----------|------------------|-------------------------|
| E2 | 135,005 | Germanium | 6,788 |
| S2 | 111,525 | Air | 2,305 |
| E4 | 122,760 | Amtir | 9,738 |
| S4 | 489,371 | Air | 74,509 |
| E6 | 148,851 | ZnS | 6,879 |
| S6 | 85,111 | Air | 208,454 |
| ED | -221,988 | Air (détecteur) | |

Selon un deuxième mode de réalisation, correspondant à la figure 2, les agencements de lentilles, succession et matériaux, sont identiques à ceux spécifiés ci-dessus, à l'exception des caractéristiques dimensionnelles qui sont spécifiées dans le tableau B ci-après :

TABLEAU B

| Dioptre | Rayon (mm) | Matériau suivant | Epaisseur suivante (mm) |
|---------|-----------|------------------|-------------------------|
| E2 | 148,823 | Germanium | 6,633 |
| S2 | 121,723 | Air | 1,167 |
| E4 | 123,466 | Amtir | 9,748 |
| S4 | 510,679 | Air | 74,442 |
| E6 | 127,786 | ZnS | 6,381 |
| S6 | 76,669 | Air | 206,405 |
| ED | -221,988 | Air (détecteur) | |

On notera que le dispositif d'objectif représenté sur la figure 2 présente une qualité supérieure car il comporte une surface asphérique conique avec $K = 0,65640 \times 10^{-1}$ où K est le coefficient de conicité sur la face arrière S2 de la lentille frontale divergente en germanium. On peut ainsi obtenir un dispositif d'objectif pour infrarouge qui présente à la température ambiante les caractéristiques para-axiales suivantes : un tirage de 210 mm, un encombrement de 100 mm, une focale de 409 mm, une ouverture de F/4,1 ; un champ horizontal de 5,04° et un champ vertical de 3,36°.

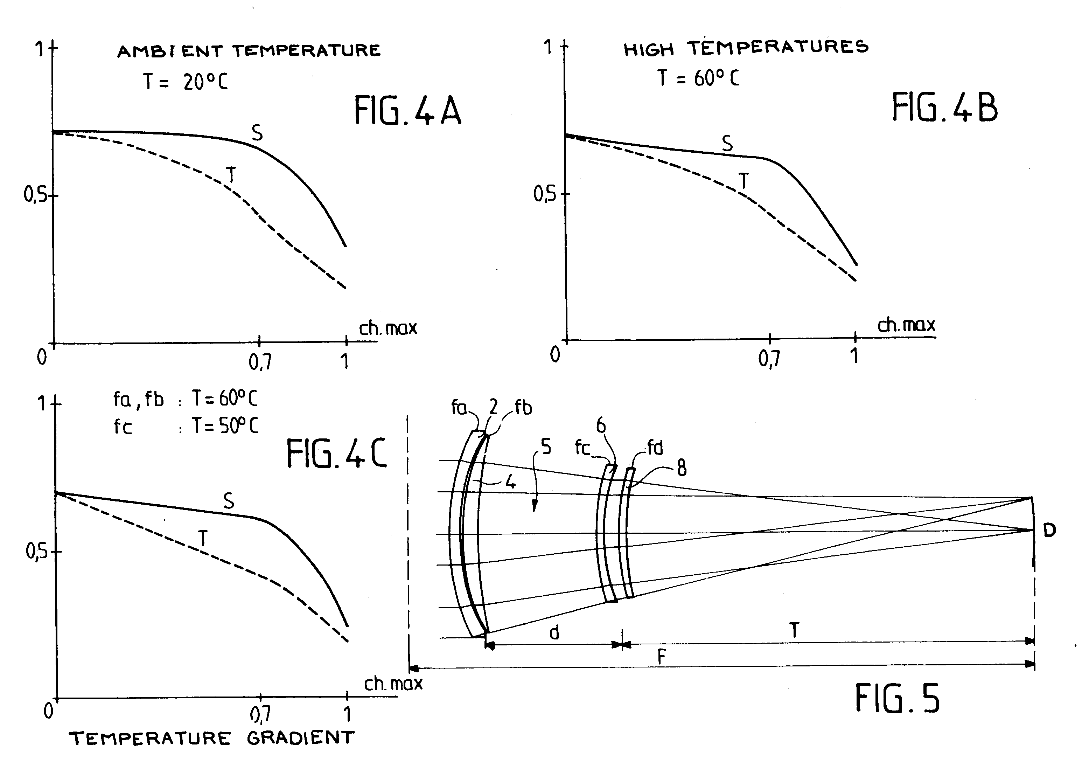

Si on se reporte aux figures 4A à 4C, où ont été relevées pour ce mode de réalisation les valeurs de la fonction de transfert de modulation à la demi-fréquence de coupure du détecteur pour trois températures différentes, figure 4A à la température ambiante 20°C, figure 4B à une température élevée T=60°C, et figure 4C où l'ensemble avant est à T=60°C tandis que la lentille arrière est à T=50°C, c'est-à-dire avec un gradient de température, on voit que la qualité dans le champ est essentiellement limitée par le chromatisme de grandeur apparente. En fait, le chromatisme de l'ensemble constitué par la lentille convergente de l'ensemble avant, en chalcogénure, et la lentille divergente arrière, en sulfure de zinc, est corrigé par la lentille frontale en germanium, qui fait office de hublot dans ce dispositif téléobjectif.

De même, comme on peut le voir sur les figures 4A à 4C, l'ensemble avant, constitué par le doublet comportant une lentille divergente en germanium et une lentille convergente en chalcogénure est approximativement corrigé des dérives thermiques. En fait, la puissance de la lentille divergente en germanium, de forte dispersion thermique, a été minimisée. Il est également à noter que la puissance de chacune des lentilles constitutives du système objectif a été adaptée au coefficient de dilatation des supports et des entretoises. Dans le mode de réalisation illustré sur les dessins, toutes les cales (non représentées) sont en aluminium. De plus, un tel système d'objectif n'est pas perturbé en température étant donné que le plan de mise au point reste fixe dans le cas où le matériau subit une élévation uniforme de température. De même un gradient linéaire de température de 10°C entre l'ensemble convergent avant 2, 4 et la lentille divergente arrière 6 (figure 4C) affecte peu la qualité de l'image. Les focales fa et fb respectivement de la lentille divergente avant et de la lentille convergente avant ont été optimisées selon les critères exposés ci-dessus.

De ce qui précède, on voit que la succession la plus appropriée pour obtenir une athermalisation favorable est la séquence Ge-chalcogénure-Zns qui correspond à la courbe D de la figure 1. Les variations relatives du champ pour T=50°C sont respectivement de 1,6°/oo, pour le mode de réalisation associé au Tableau A et de 1,8°/oo, pour le mode de réalisation associé au tableau B.

Ces variations, très modestes, entraînent des erreurs sur l'appréciation de l'angle de champ d'entrée θ, de l'ordre de 0,1 mrd en bord de champ diagonal.

Cette erreur peut encore être réduite par dédoublement de la lentille arrière selon un mode de réalisation perfectionné du dispositif d'objectif tel que représenté sur la figure 5.

Cet objectif comporte deux doublets, à savoir un premier doublet convergent constitué d'une lentille divergente 2 présentant une focale fa et d'une lentille convergente 4 associée présentant une focale fb, coopérant avec un second doublet, divergent, constitué d'une lentille divergente 6 présentant une focale fc et d'une lentille convergente 8 présentant une focale fd, la distance entre les deux doublets étant d pour un tirage T et une focale F de l'ensemble. Les relations fondamentales suivantes régissent les quatre conditions :

– Condition d'achromatisation :

$$\frac{1}{fa.\delta a} + \frac{1}{fb.\delta b} + \frac{(1-k)^2}{fc.\delta c} + \frac{(1-k)^2}{fd.\delta d} = 0 \qquad [P_1]$$

– Condition de focale :

$$\frac{1}{fa} + \frac{1}{fb} + \frac{(1-k)}{fc} + \frac{1-k}{fd} = \frac{1}{F} \qquad [P_2]$$

– Condition d'athermalisation :

$$\frac{1}{fa}\left(\frac{1}{\eta a} + k\alpha\right) + \frac{1}{fb}\left(\frac{1}{\eta b} + k\alpha\right) + \frac{(1-k)^2}{fc\eta c} + \frac{(1-k)^2}{fd\eta d} = -\alpha\frac{(1-k)^2}{T} \qquad [P_3]$$

– Minimisation des variations de focale :

$$\frac{1}{fa.\eta a} + \frac{1}{fb.\eta b} + \frac{(1-k)}{fc}\left(\frac{1}{\eta c} + \alpha\right) + \frac{(1-k)}{fd}\left(\frac{1}{\eta d} + \alpha\right) = 0 \qquad [P_4]$$

Il est à noter que l'expression $P_5$, relative à la sensibilité de la combinaison optique aux gradients thermiques est inchangée.

Dans un mode de réalisation de ce système d'objectif à deux doublets, le premier doublet est constitué d'une lentille 2 divergente en germanium, faisant office de hublot, associée à une seconde lentille 4 convergente en chalcogénure de convergence suffisante pour conférer une convergence globale à l'ensemble, ce doublet étant associé à un second doublet constitué d'une lentille 6 divergente en sulfure de zinc associée à une lentille 8 convergente en germanium.

Les caractéristiques dimensionnelles des différents éléments de cet ensemble sont spécifiées au tableau C qui suit, pour un mode de réalisation optimisé :

TABLEAU C

| Dioptre | Rayon | Matériau suivant | Epaisseur suivante |
|---------|-------|------------------|--------------------|
| E2 | 159,738 | Germanium | 6,647 |
| S2 | 128,731 | Air | 2,482 |
| E4 | 133,348 | Amtir | 11,986 |
| S4 | 314,177 | Air | 80,151 |
| E6 | 154,624 | ZnS | 4,477 |
| S6 | 116,223 | Air | 11,414 |
| E8 | 179,968 | Germanium | 5,387 |
| S8 | 200,429 | Air | 279,413 |
| ED | -222,000 | Air | |

\* surface conique avec K = 0,14877

On obtient ainsi un système téléobjectif dont les caractéristiques para-axiales à température ambiante sont les suivantes : un tirage de 178 mm, un encombrement de 120 mm, une focale de 420mm, une ouverture de F/4,1, un champ horizontal de 5,04° et un champ vertical de 3,36°. La présence d'un doublet arrière comportant une lentille divergente en sulfure de zinc et une lentille convergente en germanium fait que l'achromatisme de grandeur, qui n'était pas corrigé dans les formes de réalisation des figures 1 et 2 est ici légèrement atténué.

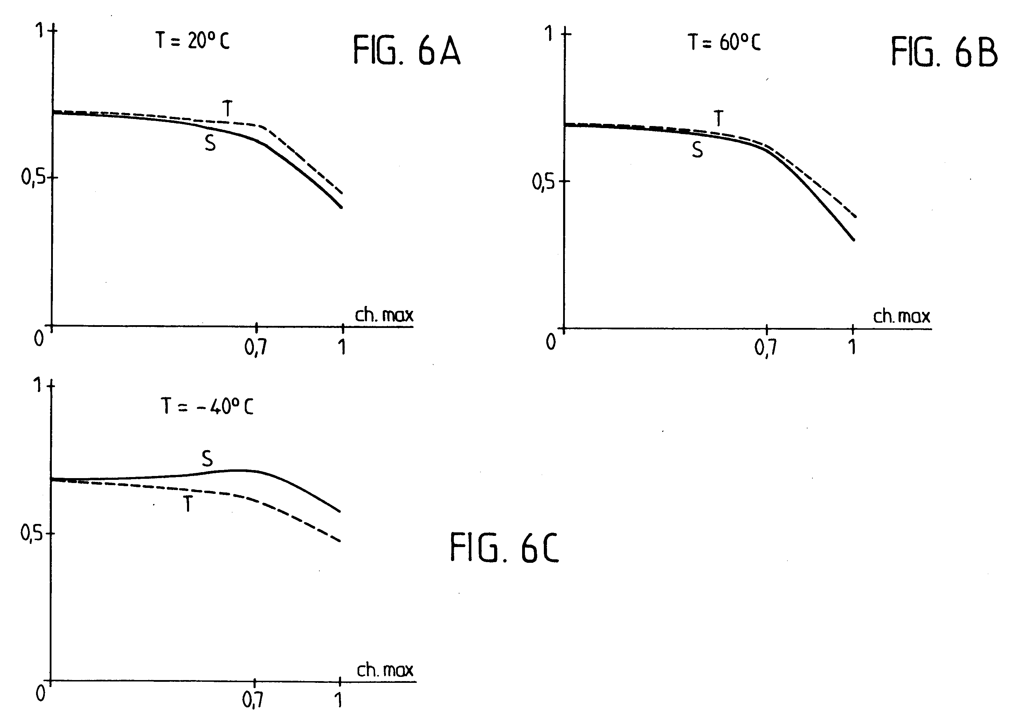

Les figures 6A à 6C illustrent la fonction de transfert de modulation en température, pour ce mode de réalisation respectivement pour les températures T=20°C, T=60°C et T=-40°C, et montrent une diminution avec la température, toutes les entretoises étant en aluminium.

Dans cette forme de réalisation, les variations relatives du champ, induites par les changements de focale avec la température, sont réduites par l'adjonction de la lentille convergente arrière en germanium.

Pour T=50°C, ces variations passent de 1,8°/oo pour le mode de réalisation correspondant au tableau B, à 0,7°/oo dans ce dernier mode, entraînant en bord de champ diagonal une erreur sur l'angle de champ objet de 0,04 mrd.

Ainsi se trouvent résolus selon la présente invention les problèmes posés par le hublot avant des téléobjectifs infrarouges, qui est maintenant remplacé avantageusement par une lentille frontale en germanium ou éventuellement en sulfure de zinc, en même temps que le problème de l'athermalisation et de l'achromatisation grâce à l'utilisation de trois lentilles réalisées en trois matériaux différents, l'association du doublet avant convergent et de la lentille arrière divergente permettant l'obtention d'une combinaison optique du type téléobjectif. Par ailleurs, les puissances et les matériaux constitutifs du doublet avant sont choisi de façon à minimiser la défocalisation induite par des gradients thermiques axiaux. De même, la séquence de verres choisie minimise les variations de focale, donc de champ, avec la température, ce qui rend possible l'utilisation d'une telle combinaison avec un système de conduite de tir. Selon un perfectionnement, le problème des variations de focale et de chromatisme est également résolu par le dédoublement de l'ensemble divergent arrière du téléobjectif, ce qui permet aussi de corriger partiellement le chromatisme de grandeur apparente de ce type d'objectif.

**Revendications**

1. Dispositif d'objectif infrarouge achromatique et athermalisé passivement, ce dispositif comportant au moins un ensemble convergent coopérant avec au moins un ensemble divergent, caractérisé en ce que l'ensemble convergent comporte au moins une lentille convergente et une lentille divergente et en ce que l'ensemble divergent est constitué d'au moins une lentille divergente, les matériaux constitutifs de ces trois lentilles étant différents et choisis parmi ceux utilisables dans la bande spectrale de 8 à 12µm.

2. Dispositif selon la revendication 1, caractérisé en ce que la séquence des matériaux constituant les lentilles est choisie de façon à minimiser les dérives thermiques de la focale du dispositif pour maintenir l'image nette sans déplacement mécanique de la lentille, tout en conservant le champ de vue objet fixe quand la température de l'ensemble évolue.

8

**3.** Dispositif selon la revendication 2 présentant une combinaison du type téléobjectif, caractérisé en ce que les puissances des lentilles et la séquence des matériaux constitutifs sont choisies de façon à minimiser les défocalisations induites par un gradient de température axial entre l'ensemble convergent avant et l'ensemble divergent arrière.

**4.** Dispositif selon la revendication 3, caractérisé en ce que la lentille frontale de l'ensemble convergent est en un matériau présentant des caractéristiques physiques de résistance aux agents chimiques et aux intempéries lui permettant de faire office de hublot avant.

**5.** Dispositif selon la revendication 4, caractérisé en ce que le matériau de la lentille frontale est du germanium ou du sulfure de zinc.

**6.** Dispositif selon la revendication 4, caractérisé en ce que l'ensemble convergent avant est constitué d'une lentille divergente en un matériau choisi parmi le germanium et le sulfure de zinc et d'une lentille convergente en chalcogénure, l'ensemble divergent étant constitué d'une lentille simple divergente.

**7.** Dispositif selon la revendication 4, caractérisé en ce que l'ensemble convergent avant est constitué d'une lentille divergente en un matériau choisi parmi le germanium et le sulfure de zinc et d'une lentille convergente en chalcogénure, et en ce que l'ensemble divergent comporte en plus de la lentille divergente une lentille convergente, l'une étant en sulfure de zinc et l'autre en germanium.

**8.** Dispositif selon la revendication 6, caractérisé en ce qu'il présente les caractéristiques suivantes :
    – lentille divergente d'entrée en germanium d'épaisseur sur l'axe 6,788 mm dont les rayons des dioptres d'entrée et de sortie sont respectivement 135,005 et 111,525 mm,
    – épaisseur d'air de 2,305 mm,
    – lentille convergente en chalcogénure d'épaisseur 9,738 mm sur l'axe, dont les rayons des dioptres d'entrée et de sortie sont respectivement 122,760 et 489,371 mm,
    – épaisseur d'air entre l'ensemble convergent et la lentille divergente de 74,509 mm,
    – lentille divergente en sulfure de zinc de 6,879 mm d'épaisseur sur l'axe dont les rayons des dioptres d'entrée et de sortie sont respectivement 148,851 et 85,111 mm,
le plan focal étant à une distance sur l'axe de 208,454 mm et le rayon de courbure de la surface correspondante étant -221,998 mm.

**9.** Dispositif selon la revendication 6, caractérisé en ce qu'il présente les caractéristiques suivantes :
    – lentille divergente d'entrée en germanium d'épaisseur sur l'axe 6,633 mm dont les rayons des dioptres d'entrée et de sortie sont respectivement 148,823 et 121,723 mm,
    – épaisseur d'air de 1,167 mm,
    – lentille convergente en chalcogénure d'épaisseur 9,748 mm sur l'axe, dont les rayons des dioptres d'entrée et de sortie sont respectivement 123,466 et 510,679 mm,
    – épaisseur d'air entre l'ensemble convergent et la lentille divergente de 74,442 mm,
    – lentille divergente en sulfure de zinc de 6,381 mm d'épaisseur sur l'axe dont les rayons des dioptres d'entrée et de sortie sont respectivement 127,786 et 76,669 mm,
le plan focal étant à une distance sur l'axe de 206,405 mm et le rayon de courbure de la surface correspondante étant -221,988 mm.
le dioptre de sortie de la lentille divergente avant étant une surface asphérique conique avec $K = 0,65640 \times 10^{-1}$ où K est le coefficient de conicité.

**10.** Dispositif selon la revendication 7, caractérisé en ce qu'il présente les caractéristiques suivantes :
    – lentille divergente d'entrée en germanium d'épaisseur sur l'axe 6,647 mm dont les rayons des dioptres d'entrée et de sortie sont respectivement 159,738 et 128,731 mm,
    – épaisseur d'air de 2,482 mm,
    – lentille convergente en chalcogénure d'épaisseur 11,986 mm sur l'axe, dont les rayons des dioptres d'entrée et de sortie sont respectivement 133,348 et 314,177 mm,
    – épaisseur d'air entre l'ensemble convergent et la lentille divergente de 80,151 mm,
    – lentille divergente en sulfure de zinc de 4,477 mm d'épaisseur sur l'axe dont les rayons des dioptres d'entrée et de sortie sont respectivement 154,624 et 116,223 mm,
    – épaisseur d'air de 11,414 mm,
    – lentille convergente en germanium d'épaisseur 5,387 mm sur l'axe dont les rayons des dioptres d'entrée et de sorties sont respectivement 179,968 mm et 200,429 mm, le dioptre de sortie étant une surface conique avec K = 0,14877;

le plan focal étant à une distance sur l'axe de 279,413 mm et le rayon de courbure de la surface correspondante étant -222,000 mm.

FIG. 1

FIG. 2

FIG. 3

Δ FOCAL LENGTH
FOR ΔT=50

A : ZnS – ZnSe – Ge
B : ZnS – Amtir – Ge
C : Ge – ZnSe – ZnS
D : Ge – Amtir – ZnS

EP 0 480 805 A1

EP 0 480 805 A1

AMBIENT TEMPERATURE
T = 20°C

FIG.4A

S

T

0,5

0          0,7    1    ch.max

HIGH TEMPERATURES
T = 60°C

FIG.4B

S

T

0,5

0          0,7    1    ch.max

fa , fb : T = 60°C
fc       : T = 50°C

FIG.4C

S

T

0,5

0          0,7    1    ch.max

TEMPERATURE GRADIENT

fa   2   fb      6

5   fc   fd   8

4

d       F       T

D

FIG.5

FIG. 6B

FIG. 6A

FIG. 6C

EP 0 480 805 A1

**Office européen des brevets**

## RAPPORT DE RECHERCHE EUROPEENNE

Numero de la demande

EP 91 40 2653

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 367 197 (HUGHES AIRCRAFT COMP.)<br>* page 3, ligne 13 - page 4, ligne 13; figure 1 * | 1,2,4-7 | G 02 B 13/14 |
| A | --- | 9,10 | |
| Y | EP-A-0 171 903 (PILKINGTON P.E. LTD.)<br>* figures 2,3; revendications 1-9; page 34, ligne 11 - page 35, ligne 6 *; & GB - A - 2161616 (cat. D)<br>--- | 1,2,4-7 | |
| A | GB-A-2 071 353 (BARR & STROUD)<br>* abrégé; page 3, lignes 8-12; figure 3 *<br>--- | 1,5 | |
| A,D | GB-A-2 121 211 (BARR & STROUD)<br>* figure 1; abrégé; table I *<br>--- | 1-3,5,6 | |
| A | EP-A-0 240 194 (PILKINGTON P.E. LTD.)<br>* page 4, ligne 18 - page 5, ligne 55; revendications 1,2; figure 1 *<br>--- | 1-3 | |
| A | LASER UND OPTOELEKTRONIK vol. 22, no. 4, août 1990, pages 71-74, Stuttgart, DE; H. SCHLOTT: "Entwicklung infrarotoptischer Systeme"<br>* chapitre 4: "Infrarotoptik in der DDR" *<br>----- | 1-3 | **DOMAINES TECHNIQUES RECHERCHES (Int. Cl.5)**<br><br>G 02 B |

Le présent rapport a été établi pour toutes les revendications

| Lieu de la recherche | Date d'achèvement de la recherche | Examinateur |
|---|---|---|
| BERLIN | 06-12-1991 | VON MOERS F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)